# EUROPÄISCHE PATENTSCHRIFT

(11) **EP 1 325 945 B1**
(45) Veröffentlichungstag und Bekanntmachung des Hinweises auf die Patenterteilung: **28.12.2005**
(21) Anmeldenummer: 03100382.5
(22) Anmeldetag: 02.12.1998
(51) Int. Cl.: C09B 67/22, D06P 1/382, C09D 11/00

(54) **Verfahren zum Färben oder Bedrucken sowie neue Reaktivfarbstoffe**
Method for dyeing or printing and new reactive dyes
Procédé de teinture ou d'impression et nouveaux colorants réactifs

(30) Priorität: 11.12.1997 EP 97810975
(43) Veröffentlichungstag der Anmeldung: 09.07.2003
(62) Teilanmeldung aus: 98811197.7
(73) Patentinhaber: Ciba Specialty Chemicals Holding Inc., 4002 Basel (CH)
(72) Erfinder: Scheibli, Peter, 4102 Binningen (CH); Aeschlimann, Peter, 4123 Allschwil (CH); Lehmann, Urs, 4057 Basel (CH); Frick, Marcel, 4153 Reinach (CH)

(56) Entgegenhaltungen:
- EP-A- 0 300 195
- EP-A- 0 437 184
- EP-A- 0 625 550
- DATABASE WPI Section Ch, Week 199617 Derwent Publications Ltd., London, GB; Class A60, AN 1996-167355 XP002244083 -& JP 08 048903 A (DAISTAR JAPAN KK), 20. Februar 1996 (1996-02-20)
- DATABASE WPI Section Ch, Week 199021 Derwent Publications Ltd., London, GB; Class E22, AN 1990-159126 XP002244084 -& JP 02 099564 A (MITSUBISHI KASEI CORP), 11. April 1990 (1990-04-11)

## Beschreibung

Die vorliegende Erfindung betrifft Mischungen von Reaktivfarbstoffen und deren Verwendung zum Färben oder Bedrucken von hydroxylgruppenhaltigen oder stickstoffhaltigen Fasermaterialien. Die erfindungsgemässen Farbstoffmischungen eignen sich auch zum Färben oder Bedrucken von Papier oder Kunststoff-Folien.

Die Praxis des Färbens und Bedruckens mit Reaktivfarbstoffen hat in neuerer Zeit zu erhöhten Anforderungen an die Qualität der Färbungen und Drucke und die Wirtschaftlichkeit des Färbe- bzw. Druckprozesses geführt. Infolge dessen besteht weiterhin ein Bedarf nach neuen Verfahren, welche verbesserte Eigenschaften hinsichtlich Applikation sowie hinsichtlich der erhaltenen Färbungen bzw. Drucke aufweisen.

Für das Färben bzw. Bedrucken werden heute Verfahren gefordert, worin die Reaktivfarbstoffe eine ausreichende Substantivität haben und zugleich eine gute Auswaschbarkeit der nicht fixierten Anteile aufweisen. Die Färbungen und Drucke sollten ferner eine gute färberische Ausbeute, hohe Fixiergrade und gute Allgemeinechtheiten, wie Nassechtheiten und insbesondere Lichtechtheiten, aufweisen. So sollte bei der Verwendung von Kombinationen von Reaktivfarbstoffen der Effekt des sogenannten catalytic fading weitestgehend vermieden werden. Gemäss diesem Effekt bleicht einer der Reaktivfarbstoffe in Kombination mit anderen Reaktivfarbstoffen deutlich stärker aus als dies bei seiner alleinigen Verwendung, d.h. in Einzelnuance, der Fall ist.

Ferner sollten das Verfahren für Tintenstrahldruck-Verfahren (Jet- und Ink-Jet-Verfahren) geeignet sein.

Tintenstrahldruck-Verfahren werden bereits seit einigen Jahren in der Textilindustrie angewendet. Diese Verfahren ermöglichen es, auf die sonst übliche Herstellung einer Druckschablone zu verzichten, so dass erhebliche Kosten- und Zeiteinsparungen erzielt werden können. Insbesondere bei der Herstellung von Mustervorlagen kann innerhalb deutlich geringerer Zeit auf veränderte Bedürfnisse reagiert werden.

Entsprechende Tintenstrahldruck-Verfahren sollten insbesondere optimale anwendungstechnische Eigenschaften aufweisen. Zu erwähnen seien in diesem Zusammenhang Eigenschaften wie die Viskosität, Stabilität, Oberflächenspannung und Leitfähigkeit der verwendeten Tinten. Ferner werden erhöhte Anforderungen an die Qualität der erhaltenen Drucke gestellt, wie z.B. bezüglich Farbstärke, Faser-Farbstoff-Bindungsstabilität sowie bezüglich der Nassechtheiten und insbesondere der Lichtechtheiten.

Weiterhin sollten die für die oben genannten Verfahren zu verwendenden Reaktivfarbstoffe gut kombinierbar sein und durch Kombination die Erstellung möglichst aller Nuancen des Farbraums ermöglichen.

Von den bekannten Verfahren werden diese Anforderungen nicht in allen Eigenschaften erfüllt.

Der vorliegenden Erfindung liegt daher die Aufgabe zugrunde, neue, verbesserte Verfahren für das Färben und Bedrucken von Fasermaterialien zu finden, welche die oben charakterisierten Qualitäten in hohem Masse besitzen.

Gegenstand der vorliegenden Erfindung sind Farbstoffmischungen, welche dadurch gekennzeichnet sind, dass sie mindestens einen Reaktivfarbstoff der Formel (2) 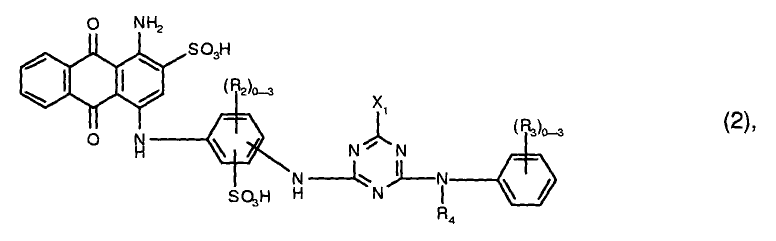 worin
(R₂)₀₋₃ für 0 bis 3 gleiche oder voneinander verschiedene C₁-C₄-Alkylreste und
(R₃)₀₋₃ für 0 bis 3 gleiche oder voneinander verschiedene Substituenten aus der Gruppe C₁-C₄-Alkyl, C₁-C₄-Alkoxy, Halogen, Carboxy und Sulfo steht,
X₁ Chlor oder Fluor ist, und
R₄ Wasserstoff oder gegebenenfalls durch Hydroxy, Sulfo oder Sulfato substituiertes C₁-C₄-Alkyl ist,
und mindestens einen Reaktivfarbstoff der Formel (3) 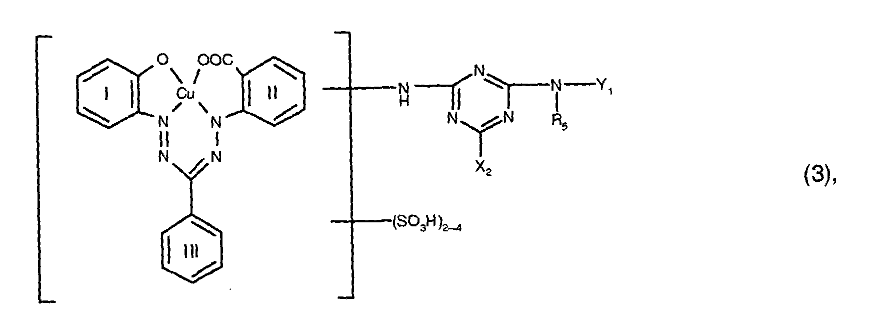 worin
R₅ Wasserstoff oder gegebenenfalls durch Hydroxy, Sulfo oder Sulfato substituiertes C₁-C₄-Alkyl,
X₂ Chlor oder Fluor ist,
Y₁ Wasserstoff, gegebenenfalls durch Hydroxy, Sulfo oder Sulfato substituiertes und gegebenenfalls durch Sauerstoff unterbrochenes C₁-C₈-Alkyl oder gegebenenfalls durch C₁-C₄-Alkyl, C₁-C₄-Alkoxy, Halogen, Carboxy oder Sulfo substituiertes Phenyl oder Naphthyl ist, und
die Benzolkerne I, II und III keine weiteren Substituenten enthalten oder durch C₁-C₄-Alkyl, C₁-C₄-Alkoxy, Halogen oder Carboxy weitersubstituiert sind,
enthalten.

Die Druckschriften EP,A,300,195; JP-A-8-048 903 sowie JP-A-2-099 564 offenbaren ebenfalls Reaktivfarbstoffkombinationen mit Anthrachinon - und Formazankomponenten.

In den obigen Reaktivfarbstoffen vorhandene Sulfogruppen können generell sowohl als freie Säure (-SO₃H) als auch in einer beliebigen Salzform, z.B. als Alkali-, Erdalkali- oder Ammoniumsalz oder als Salz eines organischen Amins wie etwa dem Natrium-, Kalium-, Lithium- oder Ammoniumsalz, dem Salz des Triethanolamins oder dem Mischsalz zweier oder mehrerer verschiedener Kationen, z.B. als Na/Li-, Na/NH₄- oder Na/Li/NH₄-Mischsalz, vorliegen.

Als C₁-C₄-Alkyl kommen für R₂, R₃, R₄, und R₅ sowie die anderen oben als Substituenten genannten C₁-C₄-Alkylreste z.B. Methyl, Aethyl, Propyl, Isopropyl, Butyl, sek.-Butyl, tert.-Butyl oder Isobutyl, insbesondere Methyl oder Aethyl, in Betracht. Von besonderer Bedeutung sind hierbei die Methylreste. Die Alkylreste R₄ und R₅ können wie oben angegeben substituiert sein. Vorzugsweise sind die genannten Alkylreste unsubstituiert.

Als C₁-C₄-Alkoxy kommen für R₃ sowie die anderen oben als Substituenten genannten C₁-C₄-Alkoxyreste z.B. Methoxy, Äthoxy, Propoxy, Isopropoxy, Butoxy oder Isobutoxy, insbesondere Methoxy, in Betracht.

Als Halogen kommen für R₃ sowie die anderen oben als Substituenten genannten Halogenreste z.B. Fluor oder insbesondere Chlor in Betracht.

R₂ ist bevorzugt Methyl.

R₃ ist bevorzugt C₁-C₄-Alkyl, C₁-C₄-Alkoxy oder Sulfo, insbesondere Sulfo.

Für X₁ ist die Bedeutung als Chlor bevorzugt.

R₄ ist bevorzugt Wasserstoff oder C₁-C₄-Alkyl, insbesondere Wasserstoff.

Bevorzugt als Reaktivfarbstoffe der Formel (2) sind solche, worin
R₃ Sulfo, R₄ Wasserstoff oder C₁-C₄-Alkyl und X₁ Chlor ist. Vorzugsweise enthalten die Reaktivfarbstoffe der Formel (2) drei Reste R₂.

Besonders bevorzugt als Reaktivfarbstoffe der Formel (2) sind solche der Formel

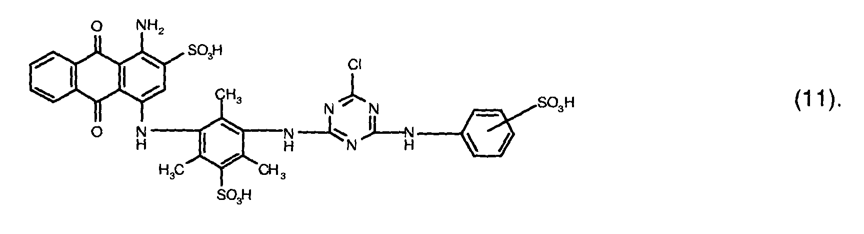

R₅ ist bevorzugt Wasserstoff oder C₁-C₄-Alkyl, insbesondere Wasserstoff.

X₂ bedeutet bevorzugt Chlor.

Y₁ ist bevorzugt Wasserstoff oder gegebenenfalls durch Hydroxy, Sulfo oder Sulfato substituiertes und gegebenenfalls durch Sauerstoff unterbrochenes C₁-C₈-Alkyl, insbesondere Wasserstoff.

Die Benzolkerne I, II und III des Reaktivfarbstoffs der Formel (3) enthalten bevorzugt keine weiteren Substituenten.

Bevorzugt als Reaktivfarbstoffe der Formel (3) sind solche, worin
R₅ Wasserstoff oder C₁-C₄-Alkyl, insbesondere Wasserstoff, X₂ Chlor und Y₁ Wasserstoff ist.

Besonders bevorzugt als Reaktivfarbstoffe der Formel (3) sind solche der Formel 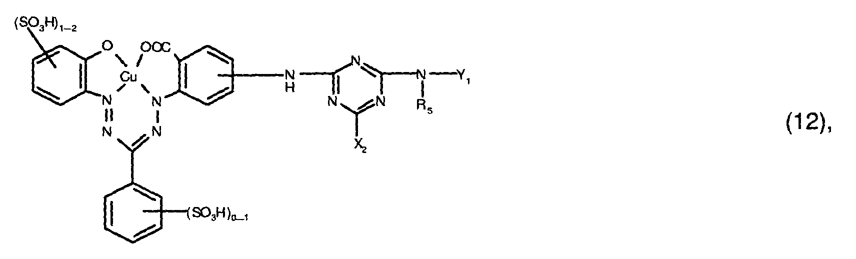 worin R₅ Wasserstoff oder C₁-C₄-Alkyl, insbesondere Wasserstoff, ist und für X₂ und Y₁ die oben angegebenen Bedeutungen und Bevorzugungen gelten.

Ganz besonders bevorzugt als Reaktivfarbstoffe der Formel (3) sind solche der Formel

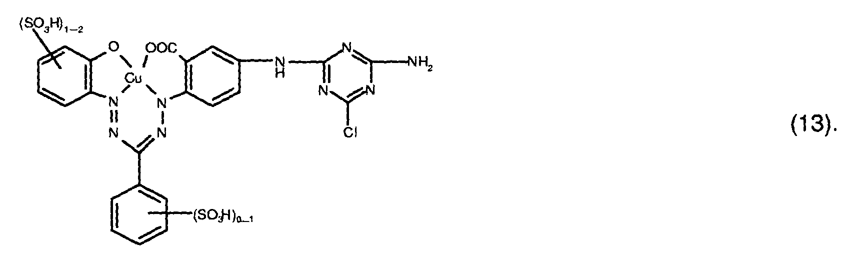

Die erfindungsgemässen Farbstoffmischungen der Reaktivfarbstoffe der Formeln (2) und (3) eignen sich zum Färben oder Bedrucken von hydroxylgruppenhaltigen oder stickstoffhaltigen Fasermaterialien.

Die erfindungsgemässen Farbstoffmischungen eignen sich ferner zum Färben oder Bedrucken von Papier oder Kunststoff-Folien.

Als Beispiele für stickstoffhaltige Fasermaterialien seien natürliche Polyamidmaterialien, wie z.B. Wolle, oder synthetische Polyamidmaterialien, wie z.B. Polyamid 6 oder Polyamid 6.6, genannt.

Bevorzugt sind hydroxylgruppenhaltige, insbesondere cellulosehaltige Fasermaterialien, die ganz oder teilweise aus Cellulose bestehen. Beispiele sind natürliche Fasermaterialien wie Baumwolle, Leinen oder Hanf, sowie Zellstoff und regenerierte Fasermaterialien wie z.B. Viskose sowie Lyocell. Besonders bevorzugt sind hierbei Viskose oder vorzugsweise Baumwolle.

Die genannten Fasermaterialien liegen vorzugsweise als textile Fasermaterialien vor, insbesondere als flächige textile Gewebe, Gewirke oder Bahnen.

Als Beispiele für Papier, das nach dem erfindungsgemässen Verfahren gefärbt oder bedruckt werden kann seien handelsübliches Ink-Jet Papier, Photopapier, Glanzpapier, mit Kunststoff beschichtetes Papier, wie z.B. Epson Ink-Jet Paper, Epson Photo Paper, Epson Glossy Film, HP Special Ink-Jet Paper, Encad Photo Gloss Paper, llford Photo Paper genannt. Kunststoff-Folien, die nach dem erfindungsgemässen Verfahren gefärbt oder bedruckt werden können sind beispielsweise transparent oder milchig/undurchsichtig. Geeignete Kunststoff-Folien sind z.B. 3M Transparency-Film.

Gemäss einer Ausführungsform kann das Färben oder Bedrucken gemäss den üblichen Färbe- bzw. Druckverfahren ausgeführt werden. Die Färbeflotten oder Druckpasten können hierbei ausser Wasser und den Farbstoffen weitere Zusätze, beispielsweise Netzmittel, Antischaummittel, Egalisiermittel oder die Eigenschaft des Substrates, wie beispielsweise des Textilmaterials, beeinflussende Mittel, wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Bevorzugt ist das Färben nach dem Ausziehverfahren oder dem Foulard-Färbeverfahren. Die genannten Verfahren eignen sich vorzugsweise für das Färben von hydroxylgruppenhaltigen oder stickstoffhaltigen Fasermaterialien.

Gemäss dem Ausziehverfahren erfolgt das Färben in der Regel in wässrigem Medium, bei einem Flottenverhältnis von beispielsweise 1:2 bis 1:60, insbesondere einem Flottenverhältnis von 1:5 bis 1:20, und einer Temperatur von 20 bis 105°C, insbesondere 30 bis 90°C, und vorzugsweise 30 bis 70°C.

Die Mengen, in denen die Reaktivfarbstoffe hierbei in den Färbebädern verwendet werden, können je nach der gewünschten Farbtiefe schwanken, im allgemeinen haben sich Mengen von 0,01 bis 10 Gewichtsprozent, insbesondere 0,01 bis 6 Gewichtsprozent, bezogen auf das Färbegut, als vorteilhaft erwiesen.

Gemäss dem Foulard-Färbeverfahren wird die Ware in der Regel mit wässrigen, gegebenenfalls salzhaltigen Farbstofflösungen imprägniert. Die Flottenaufnahme beträgt hierbei z.B. 20 bis 150%, insbesondere 40 bis 120% und vorzugsweise 50 bis 100%, bezogen auf das Gewicht des zu färbenden Fasermaterials. Gegebenenfalls enthält die Flotte bereits Fixieralkali, oder das Fasermaterial wird nach der Imprägnierung mit Fixieralkali behandelt. Als Alkali kommen z.B. Natriumcarbonat, Natriumbicarbonat, Natriumhydroxid, Dinatriumphosphat, Trinatriumphosphat, Borax, wässriges Ammoniak, Natriumtrichloracetat, Natriumformiat oder eine Mischung aus Wasserglas und einer wässrigen Natriumcarbonatlösung in Betracht. Bevorzugt sind hierbei Alkalihydroxid und/oder Alkalicarbonat, insbesondere Natriumhydroxid und/oder Natriumcarbonat.
Die Fixierung kann beispielsweise durch Wärmeeinwirkung, wie durch Dämpfen des imprägnierten Fasermaterials bei einer Temperatur von z.B. 100 bis 120°C, vorzugsweise im Sattdampf, erfolgen. Gemäss dem sogenannten Kaltverweilverfahren wird der Farbstoff zusammen mit dem Alkali auf dem Foulard aufgebracht und danach durch mehrstündiges Lagern, z.B. 3 bis 40 Stunden, bei Raumtemperatur fixiert. Nach dem Fixieren werden die Färbungen oder Drucke gegebenenfalls unter Zusatz eines dispergierend wirkenden Mittels gründlich gespült.

Besonders bevorzugt ist das Bedrucken. Als Beispiele für entsprechende Druckverfahren seien der konventionelle Druck, Schablonendruck sowie Tintenstrahldruck-Verfahren genannt.

Ganz besonders bevorzugt sind Tintenstrahldruck-Verfahren.

Für das Bedrucken von Fasermaterialien werden in der Regel Tinten verwendet, welche einen Gesamtgehalt an Reaktivfarbstoffen von z.B. 3 bis 35 Gew.-%, insbesondere 5 bis 35 Gew.-% und vorzugsweise 10 bis 30 Gew.-%, bezogen auf das Gesamtgewicht der Tinte, aufweisen.

Für das Bedrucken von Papier oder Kunststoff-Folien werden in der Regel Tinten verwendet, welche einen Gesamtgehalt an Reaktivfarbstoffen von z.B. 1 bis 30 Gew.-%, insbesondere 1,5 bis 25 Gew.-% und vorzugsweise 2 bis 20 Gew.-%, bezogen auf das Gesamtgewicht der Tinte, aufweisen.

Die in den Tinten verwendeten Reaktivfarbstoffe sollten vorzugsweise salzarm sein, d.h. einen Gesamtgehalt an Salzen von weniger als z.B. 0,5 Gew.-%, bezogen auf das Gewicht der Farbstoffe, enthalten. Reaktivfarbstoffe, die, bedingt durch ihre Herstellung und/oder die nachträgliche Zugabe von Coupagemitteln grössere Salzgehalte aufweisen, können z.B. durch Membrantrennverfahren, wie Ultrafiltration, Umkehrosmose oder Dialyse, entsalzt werden.

Ferner können die Tinten noch wasserlösliche, nichtionogene Celluloseäther enthalten, wie z.B. Methyl-, Aethyl-, Hydroxyäthyl-, Methylhydroxyäthyl-, Hydroxypropyl- oder Hydroxypropylmethylcellulose. Bevorzugt sind Methylcellulose oder insbesondere Hydroxyäthylcellulose. Die Celluloseäther können in der Tinte üblicherweise in einer Menge von 0,01 bis 2 Gew.-%, insbesondere 0,01 bis 1 Gew.-% und vorzugsweise 0,01 bis 0,5 Gew.-%, bezogen auf das Gesamtgewicht der Tinte, verwendet werden.

Weiterhin können die Tinten Alginate, insbesondere Alkalialginate und vorzugsweise Natriumalginat, enthalten. Diese können in der Tinte üblicherweise in einer Menge von 0,01 bis 2 Gew.-%, insbesondere 0,01 bis 1 Gew.-% und vorzugsweise 0,01 bis 0,5 Gew.-%, bezogen auf das Gesamtgewicht der Tinte, verwendet werden.

Bevorzugt weisen die Tinten eine Viskosität von 1 bis 40 mPa·s auf.

Ferner können die Tinten Puffersubstanzen enthalten, wie z.B. Borax, Borat oder Citrat. Als Beispiele seien Natriumborat, Natriumtetraborat sowie Natriumcitrat genannt.
Sie können insbesondere in Mengen von 0,1 bis 3 Gew.-%, vorzugsweise 0,1 bis 1 Gew.-%, bezogen auf das Gesamtgewicht der Tinte, verwendet werden, um einen pH-Wert von z.B. 5 bis 9, insbesondere 6 bis 8, einzustellen.

Als weitere Zusätze können die Tinten z.B. N-Methyl-2-pyrrolidon oder insbesondere 1,2-Propylenglykol enthalten. Diese können in der Tinte üblicherweise in einer Menge von 5 bis 30 Gew.-%, insbesondere 5 bis 20 Gew.-% und vorzugsweise 10 bis 20 Gew.-%, bezogen auf das Gesamtgewicht der Tinte, verwendet werden.

Ferner können die Tinten noch, falls gewünscht, übliche Zusätze, wie z.B. schaumdämpfende Mittel oder insbesondere das Pilz- und/oder Bakterienwachstum hemmende Stoffe, enthalten. Diese werden üblicherweise in Mengen von 0,01 bis 1 Gew.-%, bezogen auf das Gesamtgewicht der Tinte, verwendet.

Das Bedrucken nach dem Tintenstrahldruck-Verfahren kann mit an und für sich bekannten für den textilen Druck geeigneten Tintenstrahldruckern ausgeführt werden.

Im Falle des Tintenstrahldruck-Verfahrens werden einzelne Tropfen der Tinte kontrolliert aus einer Düse auf ein Substrat gespritzt. Ueberwiegend werden hierzu die kontinuierliche Ink-Jet-Methode sowie die Drop on demand-Methode verwendet. Im Falle der kontinuierlichen Ink-Jet-Methode werden die Tropfen kontinuierlich erzeugt, wobei nicht für den Druck benötigte Tropfen in einen Auffangbehälter abgeleitet und rezykliert werden. Im Falle der Drop on demand-Methode hingegen werden Tropfen nach Wunsch erzeugt und gedruckt; d.h. es werden nur dann Tropfen erzeugt, wenn dies für den Druck erforderlich ist. Die Erzeugung der Tropfen kann z.B. mittels eines Piezo-Inkjet-Kopfes oder mittels thermischer Energie (Bubble Jet) erfolgen. Bevorzugt ist für das erfindungsgemässe Verfahren der Druck nach der Drop on demand-Methode, insbesondere mittels eines Piezo-Inkjet-Kopfes.

Gemäss einer bevorzugten Ausführungsform zum Bedrucken nach dem Tintenstrahldruck-Verfahren erfolgt vor dem Bedrucken eine Vorbehandlung des Fasermaterials, worin man das zu bedruckende Fasermaterial zuerst mit einer wässrigen alkalischen Flotte behandelt und das behandelte Fasermaterial gegebenenfalls trocknet.

Die wässrige alkalische Flotte enthält mindestens eine der üblichen Basen, welche in konventionellen Reaktivdruckverfahren zur Fixierung der Reaktivfarbstoffe eingesetzt werden. Die Base wird z.B. in einer Menge von 10 bis 100 g/l Flotte, vorzugsweise 10 bis 50 g/l Flotte, eingesetzt. Als Base kommen beispielsweise Natriumcarbonat, Natriumhydroxid, Dinatriumphosphat, Trinatriumphosphat, Natriumacetat, Natriumpropionat, Natriumhydrogencarbonat, wässriges Ammoniak oder Alkalispender, wie z.B. Natriumchloracetat oder Natriumformiat in Betracht. Vorzugsweise wird Natriumhydrogencarbonat, Natriumcarbonat oder eine Mischung aus Wasserglas und Natriumcarbonat verwendet. Der pH-Wert der alkalischen Flotte beträgt in der Regel 7,5 bis 13,5, vorzugsweise 8,5 bis 12,5. Die wässrige alkalische Flotte kann ausser den Basen weitere Zusätze, z.B. Hydrotropiermittel, enthalten. Als Hydrotropiermittel wird bevorzugt Harnstoff verwendet, der z.B. in einer Menge von 25 bis 200 g/l Flotte, vorzugsweise 50 bis 150 g/l Flotte eingesetzt wird.
Vorzugsweise wird das Fasermaterial nach der obigen Vorbehandlung getrocknet.

Nach dem Bedrucken gemäss dem Tintenstrahldruck-Verfahren wird das Fasermaterial vorteilhafterweise getrocknet, vorzugsweise bei Temperaturen bis 150°C, insbesondere 80 bis 120°C, und anschliessend einem Hitzebehandlungsprozess unterworfen, um den Druck zu vervollständigen, bzw. den Farbstoff zu fixieren.

Die Hitzebehandlung kann z.B. durch ein Warmverweilverfahren, einen Thermosolierprozess oder vorzugsweise durch ein Dämpfverfahren durchgeführt werden.

Beim Dämpfverfahren wird das bedruckte Fasermaterial z.B. einer Behandlung in einem Dämpfer mit gegebenenfalls überhitztem Dampf, zweckmässigerweise bei einer Temperatur von 95 bis 180°C, vorteilhafterweise im Sattdampf, unterzogen.

Im Anschluss wird das bedruckte Fasermaterial in der Regel in üblicher Weise mit Wasser ausgewaschen um nichtfixierten Farbstoff zu entfernen.

Die erhältlichen Färbungen und Drucke weisen gute Allgemeinechtheiten auf; sie besitzen z.B. eine hohe Faser-Farbstoff-Bindungsstabilität sowohl im sauren als auch im alkalischen Bereich, gute Nassechtheiten, wie Wasch-, Wasser-, Seewasser-, Überfärbe-und Schweissechtheit, eine gute Chlorechtheit, Reibechtheit, Bügelechtheit und Plissierechtheit sowie scharfe Konturen und eine hohe Farbstärke. Hervorzuheben ist ferner die sehr gute Lichtechtheit.

Die verwendeten Reaktivfarbstoffe sind bekannt oder können in Analogie zu bekannten Farbstoffen hergestellt werden.

Von besonderem Interesse sind Farbstoffmischungen, welche einen Reaktivfarbstoff der Formel (11) und einen Reaktivfarbstoff der Formel (12), insbesondere einen Reaktivfarbstoff der Formel (13), enthalten.

Die Reaktivfarbstoffe der Formeln (2) und (3) liegen in dem Farbstoffgemisch z.B. im Gewichtsverhältnis von 1:99 bis 99:1, vorzugsweise 10:90 bis 90:10 und besonders bevorzugt 20:80 bis 80:20, vor.

Die erfindungsgemässen Farbstoffgemische können z.B. durch Mischung der Einzelfarbstoffe hergestellt werden. Dieser Mischprozess erfolgt z.B. in geeigneten Mühlen, z.B. Kugel- oder Stiftmühlen, sowie in Knetern oder Mixern.

Die erfindungsgemässen Farbstoffmischungen der Reaktivfarbstoffe der Formeln (2) und (3) ergeben Färbungen und Drucke mit guten Allgemeinechtheiten; sie besitzen z.B. eine hohe Faser-Farbstoff-Bindungsstabilität sowohl im sauren als auch im alkalischen Bereich, eine gute Lichtechtheit und gute Nassechtheiten, wie Wasch-, Wasser-, Seewasser-, Überfärbe-und Schweissechtheit, eine gute Chlorechtheit, Reibechtheit, Bügelechtheit und Plissierechtheit sowie scharfe Konturen und eine hohe Farbstärke.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

### Herstellungsbeispiel 1:

a) In einem Sulfierkolben werden 345 Teile Chlorsulfonsäure vorgelegt und es werden bei einer Temperatur von 20 bis 25°C innerhalb von einer Stunde 85,7 Teile Nickelphthalocyanin eingetragen. Anschliessend wird eine halbe Stunde nachgerührt.
   Nun erhöht man die Temperatur innerhalb von zwei Stunden auf 110°C und hält diese Temperatur noch weitere 30 Minuten. Dann wird die Temperatur innerhalb von einer Stunde auf 130°C erhöht und weitere sechs Stunden bei ca. 133°C gehalten.
   Die Temperatur wird auf 80 °C gesenkt, es werden 59 Teile Thionylchlorid innerhalb von zwei Stunden bei einer Temperatur von 77 bis 80°C zugetropft und die Temperatur wird noch während vier Stunden gehalten. Die Reaktionsmasse wird abgekühlt. Die Masse beträgt 500 Teile. Die Masse kann auf Vorrat gehalten werden. Je nach Bedarf wird ein aliquoter Teil auf Eiswasser ausgetragen, filtriert und gewaschen, wobei man die in Form der freien Säure angegebene Nickelphthalocyanin-Verbindung der Formel 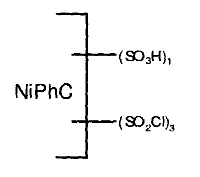 erhält.
b) 66,6 Teile der wie unter a) angegeben erhaltenen Reaktionsmasse werden auf 500 Teile Eis und 100 Teile Wasser ausgetragen und es wird die Nickelphthalocyanintrisulfochloridmonosulfonsäure von der anhaftenden Säure mit einer 5%-igen Natriumchloridlösung freigewaschen.
   5,64 Teile 1,3-Phenylendiamin-4-sulfonsäure werden in 100 Teilen Wasser mit 0,8 Teilen Natriumhydroxid neutral gelöst. Man versetzt die Lösung mit 50 Teilen Feineis und trägt die wie oben angegeben von der anhaftenden Säure freigewaschene Nickelphthalocyanintrisulfochloridmonosulfonsäure ein. Der pH-Wert wird bei 5,0 und die Temperatur während 12 Stunden bei 0°C gehalten. Dann wird die Temperatur auf 50°C angehoben und während zwei Stunden gehalten. Eine Gehaltsbestimmung zeigt, dass 1,0 Aequivalent des Amins mit dem Sulfochlorid kondensiert ist. Die Reaktionslösung wird mit 20 Teilen Natriumchlorid versetzt, die Fällung wird abfiltriert und mit einer 10%-igen wässrigen Natriumchloridlösung von der nichtkondensierten Phenylendiaminsulfonsäure freigewaschen.
   Man erhält ein Zwischenprodukt, welches in Form der freien Säure der Verbindung der Formel 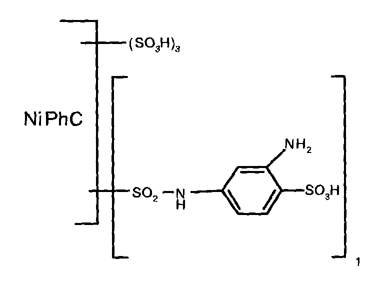 entspricht.
c) 3,7 Teile Cyanurchlorid werden in 70 Teilen Eis und 30 Teilen Wasser unter Zusatz eines oberflächenaktiv wirksamen Mittels, sowie 0,2 Teilen Dinatriumhydrogenphosphat während 10 Minuten intensiv verrührt.
   Dann wird die Paste des wie unter b) angegeben erhaltenen Zwischenprodukts eingetragen und es wird bei einer Temperatur von 0°C und einem pH-Wert von 6,0 während sechs Stunden kondensiert. Dann trägt man 1,3 Teile Ammoniumchlorid ein, erhöht die Temperatur auf 30 bis 35°C und rührt weitere zwölf Stunden bei einem pH-Wert von 8,0 bis 8,5. Die erhaltene Lösung wird mittels Dialyse entsalzt und zur Trockne eingedampft. Mar, erhält 27 Teile eines Reaktivfarbstoffs, der in Form der freien Säure der Verbindung der Formel 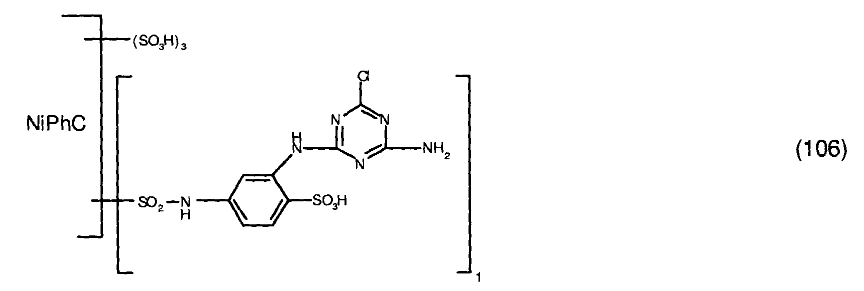 entspricht. Der Reaktivfarbstoff der Formel (106) färbt Baumwolle in türkisblauen Farbtönen.

### Herstellungsbeispiele 2 bis 8:

In analoger Weise zu den Angaben in Herstellungsbeispiel 1 können Reaktivfarbstoffe der Formel 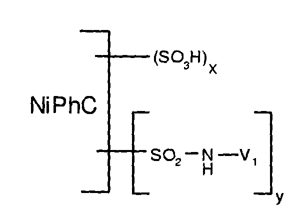 erhalten werden, worin V₁, x und y die in der folgenden Tabelle 1 in den Spalten 2 bis 4 angegebenen Bedeutungen haben. Die in der folgenden Tabelle 1 angegebenen Reaktivfarbstoffe färben Baumwolle in türkisblauen Farbtönen.

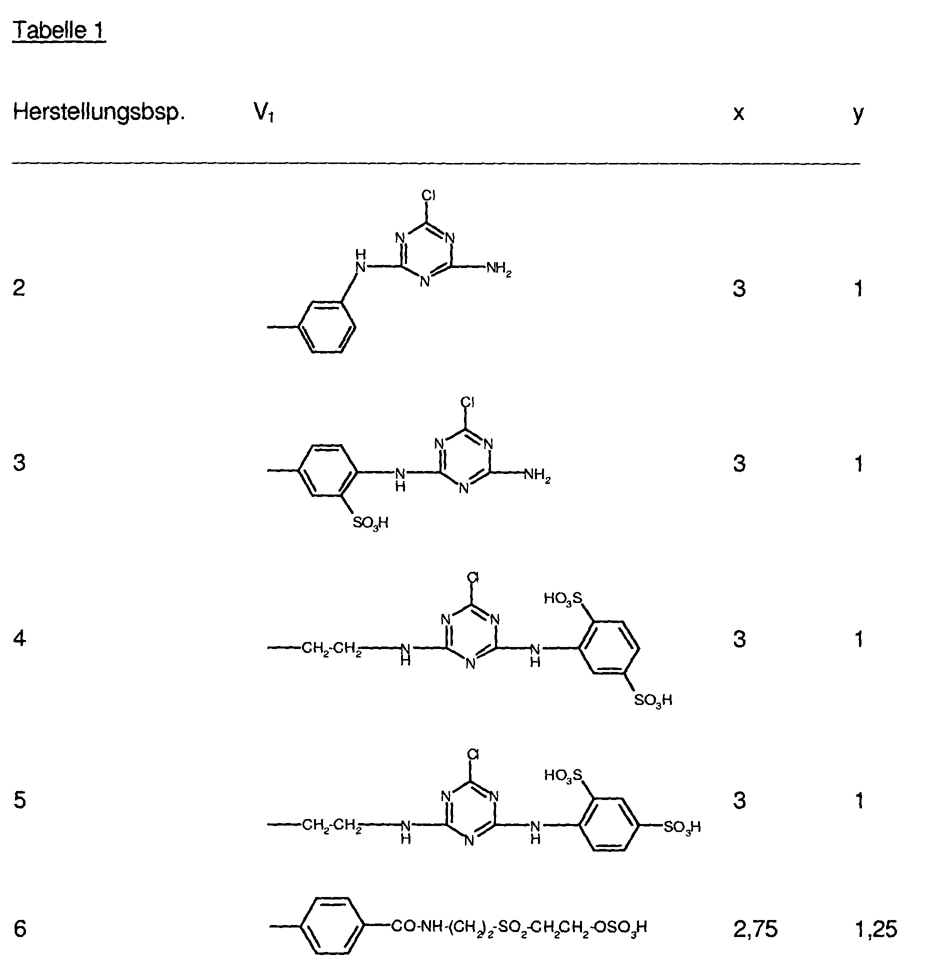

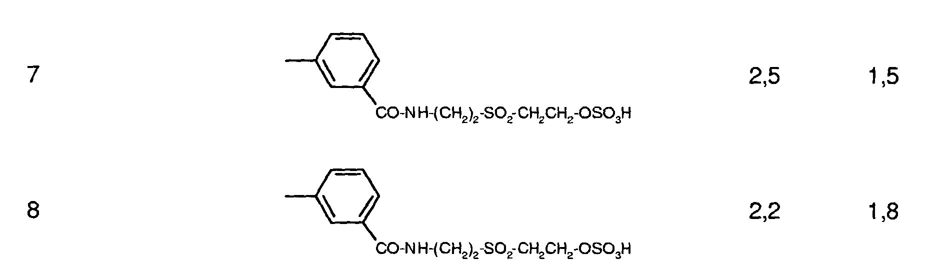

### Herstellungsbeispiel 9:

28,7 Teile Anilin-2,5-disulfonsäure werden in 150 Teilen Wasser verrührt und mit 2,0 Teilen Natriumhydroxid neutral gelöst. Nach Zugabe der üblichen Puffer- und Netzmittelmenge wird auf 0°C gekühlt und zusätzlich mit wenig feingestossenem Eis versetzt. Dann dosiert man bei schnellem Rühren 4,7 Volumenteile Cyanurfluorid zu und hält den pH-Wert durch Zugabe von 15%-iger Natronlauge bei 6,0. Anschliessend rührt man kurz nach. Zu dieser Reaktionsmasse tropft man eine warme, neutrale 10%-ige Lösung von 49,0 Teilen der Verbindung der Formel 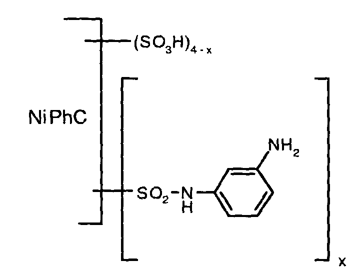 (x = 1,5; Herstellung analog Herstellungsbeispiel 1 a) und b)) bei 10 bis 15°C zu, wobei der pH-Wert mit 15%-iger Natronlauge bei 7,0 gehalten wird. Nach der Zugabe lässt man die Temperatur auf ca. 25°C ansteigen, bis die Laugenaufnahme beendet ist. Die Reaktionslösung wird dialisiert und gefriergetrockent. Man erhält einen Reaktivfarbstoff, welcher in Form der freien Säure der Verbindung der Formel (107) 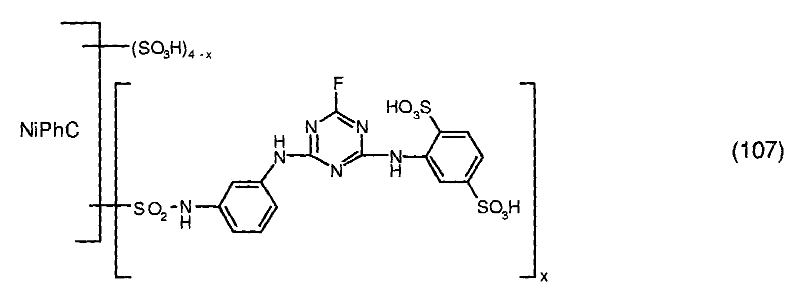 entspricht. Der Reaktivfarbstoff der Formel (107) färbt Baumwolle in türkisblauen Farbtönen.

### Applkationsbeispiel 1:

a) Mercerisiertes Baumwoll-Satin wird mit einer Flotte, enthaltend 40 g/l Natriumcarbonat und 100 g/l Harnstoff, foulardiert (Flottenaufnahme 70%) und getrocknet.
b) Auf das gemäss Schritt a) vorbehandelte Baumwoll-Satin werden auf die gleiche Substratstelle
   eine Tinte A, enhaltend 15 Gew.% des Reaktivfarbstoffs der Formel 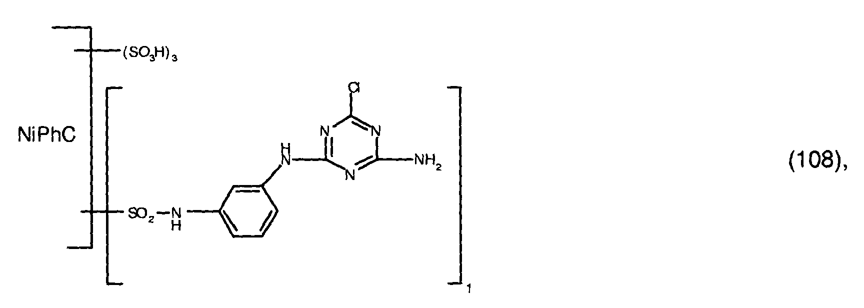 20 Gew.% 1,2-Propylenglykol und 65 Gew.% Wasser,
   eine Tinte B, enhaltend 15 Gew.% des Reaktivfarbstoffs der Formel 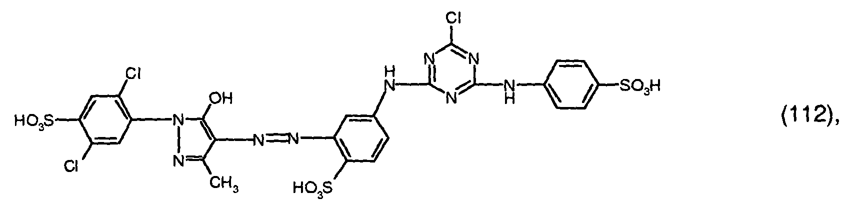 20 Gew.% 1,2-Propylenglykol und 65 Gew.% Wasser, und
   eine Tinte C, enhaltend 5 Gew.% des Reaktivfarbstoffs der Formel 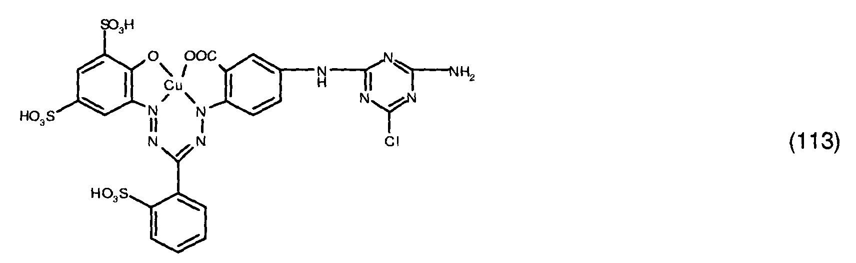 und 10 Gew% des Reaktivfarbstoffs der Formel 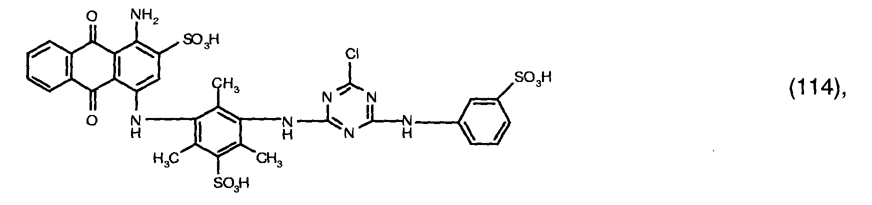 20 Gew.% 1,2-Propylenglykol und 60 Gew.% Wasser, mit drei verschiedenen Drop-on-Demand Piezo Inkjet-Köpfen aufgedruckt. Der Druck wird vollständig getrocknet und 8 Minuten bei 102°C im Sattdampf fixiert, kalt gespült, kochend ausgewaschen, nochmals gespült und getrocknet. Man erhält einen waschechten grünen Druck mit sehr hoher Lichtechtheit.

Verfährt man wie in Applikationsbeispiel 1 angegeben, verwendet jedoch eine Tinte A, welche anstelle von 15 Gew.% des Reaktivfarbstoffs der Formel (108) 15 Gew.% eines der Reaktivfarbstoffe gemäss den Herstellungsbeispielen 1 und 3 bis 9 enthält, so werden analoge Drucke erhalten.

Verfährt man wie in Applikationsbeispiel 1 angegeben, verwendet jedoch eine Tinte B, welche anstelle von 15 Gew.% des Reaktivfarbstoffs der Formel (112) 11 Gew.% des Reaktivfarbstoffs der Formel 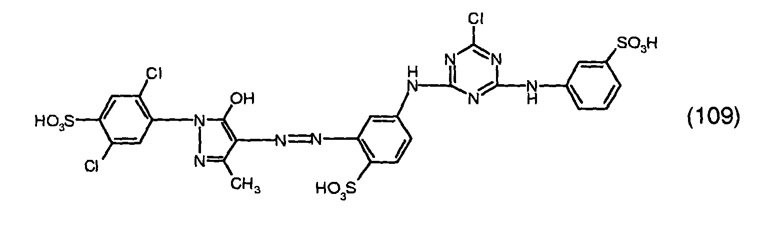 und 4 Gew.% des Reaktivfarbstoffs der Formel (112) enthält, so werden analoge Drucke erhalten.

## Patentansprüche

1. Farbstoffmischungen, **dadurch gekennzeichnet, dass** sie mindestens einen Reaktivfarbstoff der Formel (2) 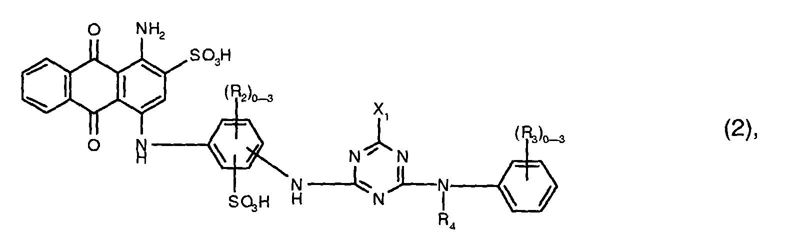 worin
(R₂)₀₋₃ für 0 bis 3 gleiche oder voneinander verschiedene C₁-C₄-Alkylreste und
(R₃)₀₋₃ für 0 bis 3 gleiche oder voneinander verschiedene Substituenten aus der Gruppe C₁-C₄-Alkyl, C₁-C₄-Alkoxy, Halogen, Carboxy und Sulfo steht,
X₁ Chlor oder Fluor ist, und
R₄ Wasserstoff oder gegebenenfalls durch Hydroxy, Sulfo oder Sulfato substituiertes C₁-C₄-Alkyl ist,
und mindestens einen Reaktivfarbstoff der Formel (3) 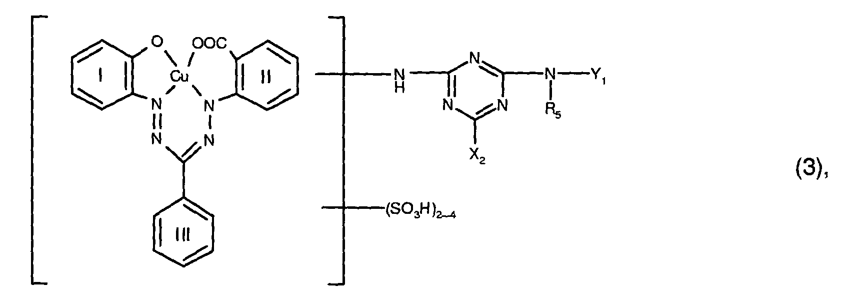 worin
R₅ Wasserstoff oder gegebenenfalls durch Hydroxy, Sulfo oder Sulfato substituiertes C₁-C₄-Alkyl,
X₂ Chlor oder Fluor ist,
Y₁ Wasserstoff, gegebenenfalls durch Hydroxy, Sulfo oder Sulfato substituiertes und gegebenenfalls durch Sauerstoff unterbrochenes C₁-C₈-Alkyl oder gegebenenfalls durch C₁-C₄-Alkyl, C₁-C₄-Alkoxy, Halogen, Carboxy oder Sulfo substituiertes Phenyl oder Naphthyl ist, und
die Benzolkerne I, II und III keine weiteren Substituenten enthalten oder durch C₁-C₄-Alkyl, C₁-C₄-Alkoxy, Halogen oder Carboxy weitersubstituiert sind,
enthalten.

2. Farbstoffmischungen gemäss Anspruch 1, **dadurch gekennzeichnet, dass**
R₃ Sulfo, R₄ Wasserstoff oder C₁-C₄-Alkyl und X₁ Chlor ist.

3. Farbstoffmischungen gemäss Anspruch 1 oder 2, **dadurch gekennzeichnet, dass** man als Reaktivfarbstoff der Formel (2) einen Reaktivfarbstoff der Formel 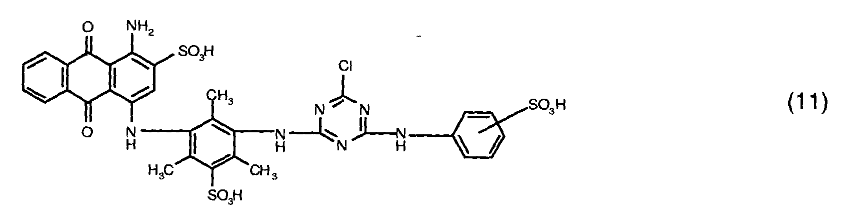 verwendet.

4. Farbstoffmischungen gemäss einem der Ansprüche 1 bis 3, **dadurch gekennzeichnet, dass** man als Reaktivfarbstoff der Formel (3) einen Reaktivfarbstoff der Formel 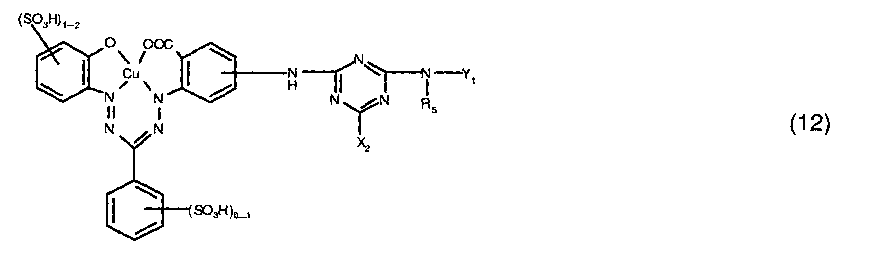 verwendet, worin
R₅ Wasserstoff oder C₁-C₄-Alkyl ist und X₂ und Y₁ die in Anspruch 1 angegebenen Bedeutungen haben.

5. Farbstoffmischungen gemäss einem der Ansprüche 1 bis 4, **dadurch gekennzeichnet, dass**
R₅ Wasserstoff oder C₁-C₄-Alkyl,
X₂ Chlor und
Y₁ Wasserstoff ist.

6. Verwendung von Farbstoffmischungen gemäss einem der Ansprüche 1 bis 5 zum Bedrucken von hydroxylgruppenhaltigen oder stickstoffhaltigen Fasermaterialien.

7. Verwendung gemäss Anspruch 6, **dadurch gekennzeichnet, dass** man hydroxylgruppenhaltiges oder stickstoffhaltiges Fasermaterial nach dem Tintenstrahldruck-Verfahren bedruckt.

8. Verwendung von Farbstoffmischungen gemäss einem der Ansprüche 1 bis 5 zum Färben von hydroxylgruppenhaltigen oder stickstoffhaltigen Fasermaterialien nach dem Ausziehverfahren oder dem Foulard-Färbeverfahren.

9. Verwendung gemäss einem der Ansprüche 6 bis 8, **dadurch gekennzeichnet, dass** es sich bei dem Fasermaterial um hydroxylgruppenhaltiges Fasermaterial, vorzugsweise cellulosehaltiges Fasermaterial, insbesondere Baumwolle oder Viskose, handelt.

10. Verwendung von Farbstoffmischungen gemäss einem der Ansprüche 1 bis 5 zum Bedrucken von Papier oder Kunstoff-Folien.

## Claims

1. A dye mixture which comprises at least one reactive dye of the formula (2) 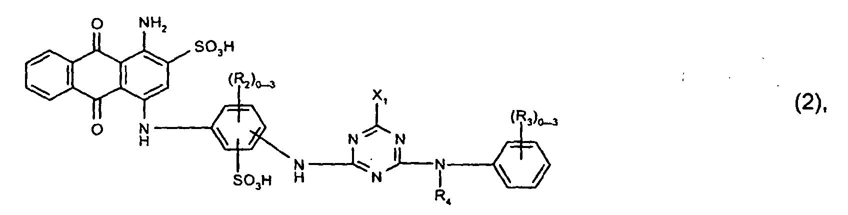 in which
(R₂)₀₋₃ is 0 to 3 C₁-C₄alkyl radicals which are identical or different from one another and
(R₃)₀₋₃ is 0 to 3 substituents, which are identical or different from another, from the group consisting of C₁-C₄alkyl, C₁-C₄alkoxy, halogen, carboxyl and sulfo,
X₁ is chlorine or fluorine and
R₄ is hydrogen or C₁-C₄alkyl which is unsubstituted or substituted by hydroxyl, sulfo or sulfato,
and at least one reactive dye of the formula (3) 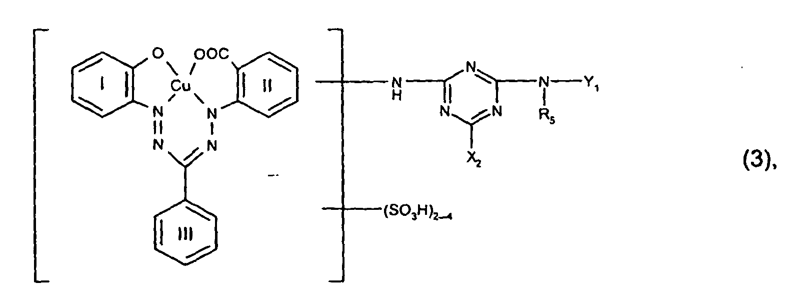 in which
R₅ is hydrogen or C₁-C₄alkyl which is unsubstituted or substituted by hydroxyl, sulfo or sulfato,
X₂ is chlorine or fluorine,
Y₁ is hydrogen, C₁-C₈alkyl which is unsubstituted or substituted by hydroxyl, sulfo or sulfato and uninterrupted or interrupted by oxygen, or phenyl or naphthyl which are unsubstituted or substituted by C₁-C₄alkyl, C₁-C₄alkoxy, halogen, carboxyl or sulfo, and
the benzene nuclei I, II and III contain no further substituents or are further substituted by C₁-C₄alkyl, C₁-C₄alkoxy, halogen or carboxyl.

2. A dye mixture according to claim 1, wherein
R₃ is sulfo,
R₄ is hydrogen or C₁-C₄alkyl and
X₁ is chlorine.

3. A dye mixture according to either claim 1 or claim 2, wherein the reactive dye of the formula (2) used is a reactive dye of the formula

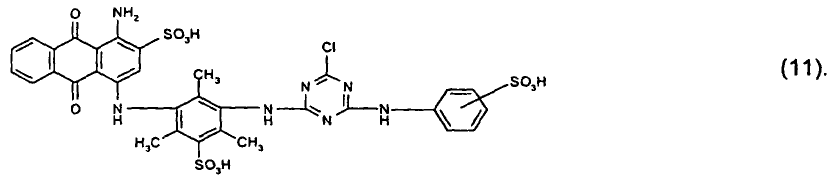

4. A dye mixture according to any one of claims 1 to 3, wherein the reactive dye of the formula (3) used is a reactive dye of the formula 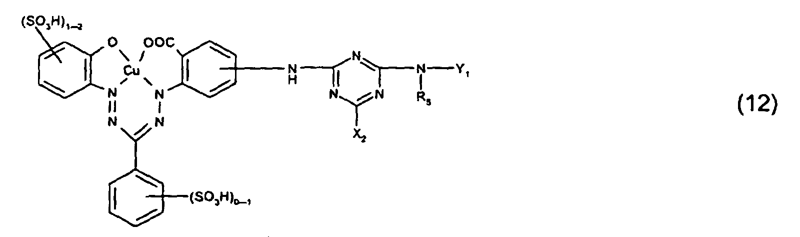 in which
R₅ is hydrogen or C₁-C₄alkyl and
X₂ and Y₁ are as defined in claim 1.

5. A dye mixture according to any one of claims 1 to 4, wherein
R₅ is hydrogen or C₁-C₄alkyl,
X₂ is chlorine and
Y₁ is hydrogen.

6. The use of dye mixtures according to any one of claims 1 to 5 for printing fibre materials containing hydroxyl groups or containing nitrogen.

7. The use according to claim 6, wherein fibre material containing hydroxyl groups or containing nitrogen is printed by the ink jet printing process.

8. The use of a dye mixture according to any one of claims 1 to 5 for dyeing fibre materials containing hydroxyl groups or containing nitrogen by the exhaust method or the pad-dyeing method.

9. The use according to any one of claims 6 to 8, wherein the fibre material is fibre material containing hydroxyl groups, preferably cellulosic fibre material, in particular cotton or viscose.

10. The use of a dye mixture according to any one of claims 1 to 5 for printing paper or films of plastic.

## Revendications

1. Mélanges de colorants **caractérisés en ce qu'**ils contiennent au moins un colorant réactif de formule (2) 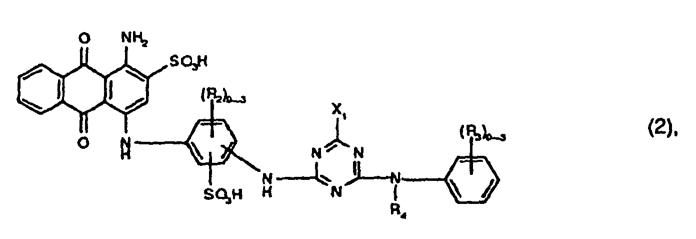 dans laquelle
(R₂)0-3 représente 0 à 3 groupes alkyle en C₁ à C₄ identiques ou différents les uns des autres et
(R₃)0-3 représente 0 à 3 substituants identiques ou différents les uns des autres choisis dans le groupe alkyle en C₁ à C₄, alcoxy en C₁ à C₄, le groupe halogéno, carboxyle et sulfo,
X₁ représente un atome de chlore ou de fluor, et
R₄ représente un atome d'hydrogène ou, éventuellement, un groupe alkyle en C₁ à C₄ éventuellement substitué par un groupe hydroxyle, sulfo ou sulfato,
et au moins un colorant réactif de formule (3) 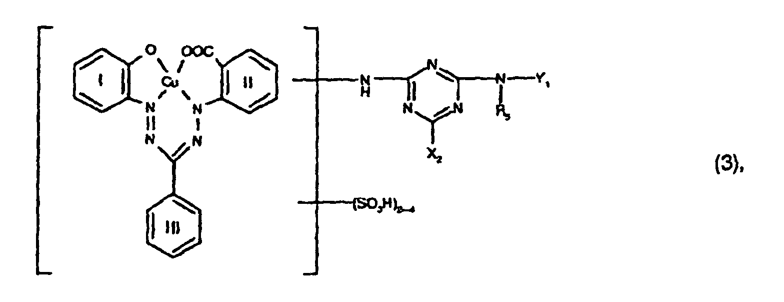 dans laquelle
R₅ représente un atome d'hydrogène ou un groupe alkyle en C₁ à C₄ éventuellement substitué par un groupe hydroxyle, sulfo ou sulfato,
X₂ représente un atome de chlore ou de fluor,
Y₁ représente un atome d'hydrogène, un groupe alkyle en C₁ à C₈ éventuellement substitué par un groupe hydroxyle, sulfo ou sulfato, et éventuellement interrompu par un atome d'oxygène ou du phényle ou du naphtyle éventuellement substitué par un groupe alkyle en C₁ à C₄, alcoxy en C₁ à C₄, un groupe halogéno, carboxyle ou sulfo, et
les noyaux benzène I, II et III ne contiennent pas de substituants supplémentaires ou sont substitués par un groupe alkyle en C₁ à C₄, alcoxy en C₁ à C₄, un groupe halogéno ou carboxyle.

2. Mélanges de colorants selon la revendication 1, **caractérisés en ce que** R₃ représente un groupe sulfo, R₄ représente un atome d'hydrogène ou un groupe alkyle en C₁ à C₄ et X₁ représente un atome de chlore.

3. Mélanges de colorants selon la revendication 1 ou 2, **caractérisés en ce que** l'on utilise en tant que colorant réactif de formule (2) un colorant réactif de formule

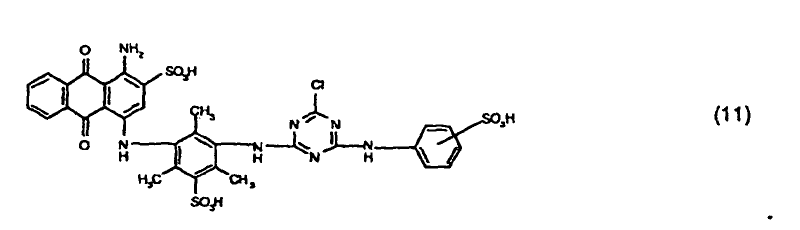

4. Mélanges de colorants selon l'une des revendications 1 à 3, **caractérisés en ce que** l'on utilise en tant que colorant réactif de formule (3) un colorant réactif de formule 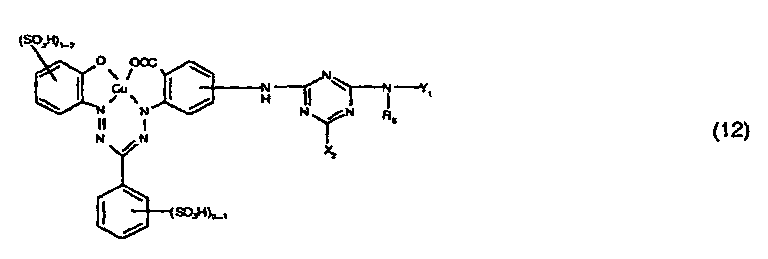 dans laquelle
R₅ représente un atome d'hydrogène ou un groupe alkyle en C₁ à C₄, et X₂ et Y₁ ont les mêmes significations que dans la revendication 1.

5. Mélanges de colorants selon l'une quelconque des revendications 1 à 4, **caractérisés en ce que**
R₅ représente un atome d'hydrogène ou un groupe alkyle en C₁ à C₄,
X₂ représente un atome de chlore et
Y₁ représente un atome d'hydrogène.

6. Utilisation de mélanges de colorants selon l'une des revendications 1 à 5, pour l'impression de matières fibreuses contenant des groupes hydroxyle ou des groupes azotés.

7. Utilisation selon la revendication 6, **caractérisée en ce que** l'on imprime les matières fibreuses contenant des groupes hydroxyle ou des groupes azotés selon le procédé d'impression par jet d'encre.

8. Utilisation de mélanges de colorants selon l'une des revendications 1 à 5, pour la coloration de matières fibreuses contenant des groupes hydroxyle ou des groupes azotés selon le procédé de teinture par épuisement ou le procédé de foulardage.

9. Utilisation selon l'une des revendications 6 à 8, **caractérisée en ce que** la matière fibreuse est une matière fibreuse contenant des groupes hydroxyle, de préférence une matière fibreuse cellulosique, en particulier du coton ou de la viscose.

10. Utilisation de mélanges de colorants selon l'une des revendications 1 à 5, pour l'impression de papier ou de films plastiques.
